# EUROPEAN PATENT APPLICATION

(11) **EP 4 480 954 A1**
(43) Date of publication of application: **25.12.2024**
(21) Application number: 23752469.9
(22) Date of filing: 14.02.2023
(51) Int. Cl.: C07F 9/09

(54) **SILICON-BASED PHOSPHATE AND PREPARATION METHOD THEREFOR**

(30) Priority: 14.02.2022 CN 202210133060
(71) Applicant: Jiujiang Tinci Materials Technology Co., Ltd., Jiujiang, Jiangxi 332500 (CN)
(72) Inventor: WANG, Kai, Guangzhou, Guangdong 510760 (CN); FAN, Weizhen, Guangzhou, Guangdong 510760 (CN); ZHAO, Jingwei, Guangzhou, Guangdong 510760 (CN)
(74) Representative: Bandpay & Greuter
(86) International application number: PCT/CN2023/075801
(87) International publication number: WO 2023/151691

(57) **Abstract**

The present application relates to a preparation method of a silicon-based phosphate ester, including the following steps: mixing a disilazane compound, a cyclic endoamine compound A and an organic base to carry out a pre-reaction, then adding an inorganic phosphate salt to carry out a mixing reaction to prepare the silicon-based phosphate ester. Types of the disilazane compound and cyclic endoamine compound are specifically defined. In the present application, the silicon-based phosphate ester is prepared by a reaction of the disilazane compound and the cyclic endoamine compound A with the organic base and the inorganic phosphate salt, and separation and purification of an intermediate are not required in the preparation process. This achieves the preparation of the silicon-based phosphate ester by a one-pot method with simple steps, and the method can be carried out under a solvent-free condition with high yield, thereby avoiding a problem of harm and subsequent treatment caused by using an organic solvent and having no corrosion to a device; and use of the disilazane compound can avoid a problem of generation of halogen salt, thereby better avoiding a problem of producing an adverse effect on performance of a battery.

## Description

The present application claims priority to Chinese Patent Application No. 202210133060.5, filed with China National Intellectual Property Administration on February 14, 2022, entitled "Silicon-Based Phosphate Ester and Preparation Method Thereof. The aforementioned patent application is hereby incorporated by reference in its entirety.

### TECHNICAL FIELD

The present application relates to the technical field of organic synthesis, and in particular to a silicon-based phosphate ester and preparation method thereof.

### BACKGROUND

Lithium-ion battery has a very broad application prospect due to its high energy density, long cycle life and no pollution in recent years. With the in-depth study of lithium-ion battery, researchers found that silicon-based phosphate ester containing P-O-Si bond as an additive in electrolyte of lithium-ion battery can inhibit a reaction of an unreacted polymerizable compound in an electrode, thereby inhibiting an increase of battery resistance and a decrease of battery capacity. When both sulfonic lactone with an unsaturated hydrocarbyl and tris(trimethylsilyl) phosphate are contained in a non-aqueous electrolyte, a film with low resistance can be formed on a negative electrode surface without reducing a high current performance of the battery, thereby substantially suppressing a self-discharge of the battery and improving a cycling performance of the battery. A battery containing such an electrolyte can be used for electric vehicles as a power battery.

At present, most of reports on synthesis of the silicon-based phosphate ester compound are about synthesis of tris(trimethylsilyl) phosphate, which mainly includes following methods:
(1) Trimethylchlorosilane and a phosphate salt are used as raw materials to carry out a reaction to obtain the tris(trimethylsilyl) phosphate. This method has a high reaction temperature, the obtained tris(trimethylsilyl) phosphate has a low purity and a low yield, and there are problems of filtration and drying of hydrochloride and corrosion and environmental pollution of hydrogen chloride by-product. In addition, this method is prone to introducing chloride ions into reaction product, which can affect a performance of the battery when using tris(trimethylsilyl) phosphate as an electrolyte additive.
(2) Hexamethyldisilazane and ammonium dihydrogen phosphate are used as raw materials to carry out a reaction at a temperature of 80 °C-160 °C for 2h-5h to produce tris(trimethylsilyl) phosphate and ammonia, and then this crude product is purified by distillation to obtain tris(trimethylsilyl) phosphate with high quality. This method has a high require for reaction temperature, and the hexamethyldisilazane usually requires an excess of 50%, which is a large amount, a molar yield of a product is less than 80%, and a cost of industrial production is high.
(3) A halogenated silane compound and a cyclic endoamine compound A are used to react in an organic solvent to produce a silicon group substituted cyclic endoamine compound, which then reacts with a phosphate salt to obtain a silicon-based phosphate ester compound. This method still introduces a halogen during preparation of intermediate, which causes a problem of generating a halogenated salt. Moreover, this method needs to be carried out in an organic solvent, which causes corrosion to device and harm to body and environment. Use of a highly toxic solvent also poses a safety risk. In addition, this method is a multi-step reaction that requires steps such as separating intermediate and removing organic solvent, and thus this preparation method is still cumbersome.

It can be seen that existing methods for preparation of a silicon-based phosphate ester compound not only have low yield and purity of the obtained silicon-based phosphate ester compound, but also need to be carried out under a harsh reaction condition (high temperature), or need to use a large amount of solvent, making the process complex and harmful. Therefore, it is necessary to provide a method, which can improve the yield and purity of the silicon-based phosphate ester compound and also has advantages of mild reaction conditions, no need for a large amount of solvent and simple process.

### SUMMARY

In view of this, the present application provides a preparation method of a silicon-based phosphate ester. This method can avoid adverse effect of a halogen salt and an organic solvent on a preparation process and a product, and does not require a separation of an intermediate product, achieving a preparation of the silicon-based phosphate ester by a one-pot method.

A specific technical solution is as follow.

The present application provides a preparation method of a silicon-based phosphate ester, including following steps:
mixing a disilazane compound, a cyclic endoamine compound A and an organic base to carry out a pre-reaction, then adding an inorganic phosphate to carry out a mixing reaction to prepare the silicon-based phosphate ester;
where the disilazane compound has a following structure as shown in Formula (I): 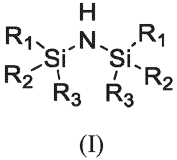
where R₁-R₃ each, at each occurrence, are independently selected from the group consisting of H, F, substituted or unsubstituted alkyl, substituted or unsubstituted alkoxy, substituted or unsubstituted unsaturated hydrocarbyl, and substituted or unsubstituted aryl; and
the cyclic endoamine compound A is selected from the group consisting of 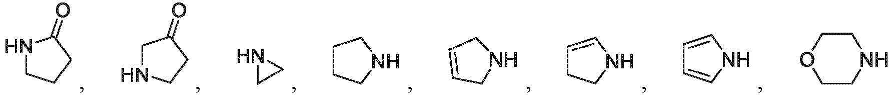 and

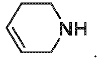

In one example, R₁-R₃ each, at each occurrence, are independently selected from the group consisting of H, F, methyl, methoxy, trifluoromethyl, ethyl, vinyl, ethoxy, ethynyl, an acetonitrile group, propyl, trifluoroethyl, trifluoropropyl, isopropyl, isopropoxy, tert-butyl, pentyl, heptyl, 1-ethylpentyl, benzyl, 2-ethoxyethyl, 1-carboxymethyl vinyl, allyl, oleyl, butadiynyl, phenylethynyl, cyclopropyl, cyclopentyl, cyclohexyl, 4-methylcyclohexyl, phenyl, 1-naphthyl, 4-methoxyphenyl, 2-fluorophenyl and 3-methylphenyl.

In one example, a molar ratio of the disilazane compound and the cyclic endoamine compound A is (1:1)-(1:4).

In one example, a molar ratio of the organic base and the disilazane compound is (1:5)-(1:10).

In one example, the pre-reaction is carried out at -10 °C-40 °C for 1h-6h.

In one example, the pre-reaction is carried out at 10 °C-30 °C.

In one example, a molar ratio of the inorganic phosphate and the disilazane compound is (1:1)-(1:4).

In one example, the molar ratio of the inorganic phosphate and the disilazane compound is (1:2)-(1:3).

In one example, the mixing reaction is carried out at 20 °C-100 °C for 1h-8h.

In one example, the mixing reaction is carried out at 30 °C-80 °C.

In one example, the organic base is selected from the group consisting of sodium hydride, sodium ethoxide, potassium tert-butoxide, n-butyl lithium, lithium diisopropylamino, triethylamine, diethylamine, morpholine, piperidine, pyridine, 4-dimethylaminopyridine, 1,8-diazabicycloundecane-7-ene, choline, tetraethyl ammonium hydroxide and a combination thereof.

In one example, the organic base is selected from the group consisting of sodium hydride, triethylamine, 4-dimethylaminopyridine and a combination thereof.

In one example, the inorganic phosphate is selected from the group consisting of ammonium phosphate, diammonium hydrogen phosphate, ammonium dihydrogen phosphate, potassium phosphate, dipotassium hydrogen phosphate, potassium dihydrogen phosphate, sodium phosphate, disodium hydrogen phosphate, sodium dihydrogen phosphate, lithium phosphate, dilithium hydrogen phosphate, lithium dihydrogen phosphate, aluminum phosphate, magnesium phosphate and a combination thereof.

Compared with prior art, the present application has following beneficial effects:
The present application uses a disilazane compound and a cyclic endoamine compound A as raw materials to mix with an organic base and then to further react with an inorganic phosphate to prepare the silicon-based phosphate ester. The preparation process does not require separation and purification of an intermediate, and can prepare the product by a one-pot method with simple steps. And this method can be carried out under solvent-free condition, avoiding harm and subsequent treatment problems caused by use of an organic solvent, without corrosion to the device. At the same time, the use of the disilazane compound can avoid the problem of producing a halogen salt, resulting in high purity of the prepared silicon-based phosphate ester, and ensuring a high yield on the premise of no use of solvent. The silicon-based phosphate ester can be directly used as electrolyte additive without further treatment, better avoiding an adverse effect on a performance of the battery. This method has a mild reaction condition, safe and easy availability of raw materials and low cost, which can better meet the needs of industrial production.

### BRIEF DESCRIPTION OF DRAWINGS

In order to provide a clearer explanation of specific embodiments in the present application or technical solution in the prior art, a brief introduction of the drawings required to be used in the description of the specific embodiments or prior art is introduced below. It is obvious that the drawings in the following description are some embodiments of the present application. For those skilled in the field, other drawings can be obtained based on these drawings without creative labor.

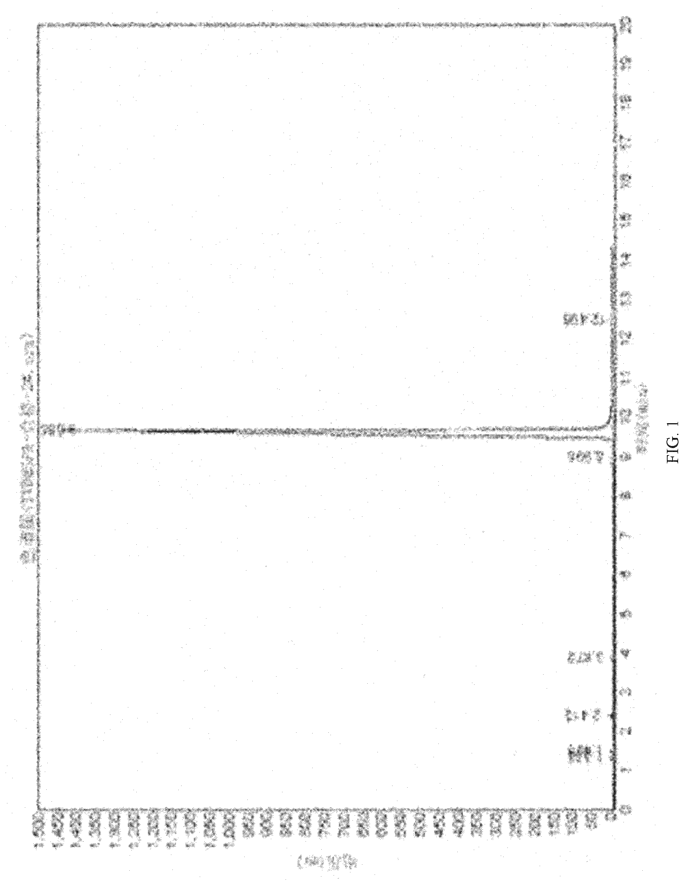

FIG. 1 shows a GC spectrum of tris(vinyldimethylsilyl) phosphate prepared in Example 1.

### DESCRIPTION OF EMBODIMENTS

In order to facilitate the understanding of the present application, a more comprehensive description of the present application will be given below, and preferred examples of the present application are given below. However, the present application can be implemented in many different forms and is not limited to the examples described herein. The purpose of providing these examples is to enable a more thorough and comprehensive understanding of the disclosed contents of the present application.

Unless otherwise defined, all technical and scientific terms used herein have the same meaning as generally understood by those skilled in the field of the present application. The terms used in the specification of the present application are only for the purpose of describing specific examples and are not intended to limit the present application.

The optional scope defined by the terms "and/or", "or/and" used herein includes any one of two or more related listed items, as well as any and all combinations of related listed items. The any and all combinations of related listed items include any two related listed items, any more related listed items, or a combination of all related listed items.

Unless otherwise defined or contradicted, the terms or phrases used herein have the following meanings.

"Alkyl" refers to a monovalent residue formed by loss of one hydrogen atom from a saturated hydrocarbon containing a primary (normal) carbon atom, or a secondary carbon atom, or a tertiary carbon atom, or a quaternary carbon atom, or a combination thereof.

"Alkoxy" refers to a group with a - O-alkyl structure, i.e., the alkyl as defined above being connected to an adjacent group via an oxygen atom.

"Unsaturated hydrocarbonyl" refers to a monovalent residue formed by loss of one hydrogen atom from a hydrocarbon containing at least one unsaturated site, i.e., a C-C sp² double bond, or a monovalent residue formed by loss of one hydrogen atom from a hydrocarbon containing at least one unsaturated site, i.e., a C-C sp triple bond.

"Aryl" refers to an aromatic hydrocarbonyl derived from an aromatic ring compound by removal of one hydrogen atom, and it can be a monocyclic aryl, a fused ring aryl, or a polycyclic aryl. For polycyclic rings, at least one ring is an aromatic ring system. Suitable examples include but are not limited to: benzene, biphenyl, naphthalene, anthracene, phenanthrene, pyrene, perylene, triphenylene and derivative thereof.

"Halogen" or "halogen group" refers to F, Cl, Br or I.

"Substituted" refers to that a hydrogen atom in a substituted group is substituted by a substituent group.

"Substituted or unsubstituted" refers to that a defined group can be substituted or unsubstituted. When the defined group is substituted, it should be understood that the defined group can be substituted by one or more substituent groups R.

In the present application, when substituent groups of a same symbol appear multiple times, the substituent groups may be the same or different from each other. For example, a general formula contains multiple R₁, R₁ can be the same or different from each other.

In the present application, when a technical feature described in an open manner includes a closed technical solution composed of listed features, it also includes an open technical solution containing the listed features.

In the present application, when a numerical range is referred to, unless otherwise defined, the above numerical range is considered as continuous and includes minimum and maximum values of the range, as well as each value between the minimum and maximum values. Furthermore, when a range refers to an integer, including every integer between minimum and maximum values of that range. In addition, when multiple ranges are provided to describe a feature or characteristic, these ranges can be merged. In other words, unless otherwise indicated, all ranges disclosed herein shall be understood to include any and all sub ranges included therein.

Percentage content involved in the present application, unless otherwise defined, refers to a mass percentage for solid-liquid mixing and solid-solid mixing, and a volume percentage for liquid-liquid mixing.

Temperature parameters in the present application, unless otherwise defined, are allowed to be both thermostatically processing and processing within a certain temperature range. The thermostatically processing allows the temperature to fluctuate within a precision range controlled by an instrument.

The present application provides a preparation method of a silicon-based phosphate ester, including the following steps:
mixing a disilazane compound, a cyclic endoamine compound A and an organic base to carry out a pre-reaction to prepare a reaction premix; and
then adding an inorganic phosphate into the reaction premix to carry out mixing and reaction to prepare the silicon-based phosphate ester;
where the disilazane compound has the following structure as shown in Formula (I): 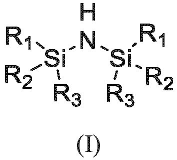
where R₁-R₃ each, at each occurrence, are independently selected from the group consisting of H, F, substituted or unsubstituted alkyl, substituted or unsubstituted alkoxy, substituted or unsubstituted unsaturated hydrocarbonyl, and substituted or unsubstituted aryl; and
the cyclic endoamine compound A is selected from the group consisting of 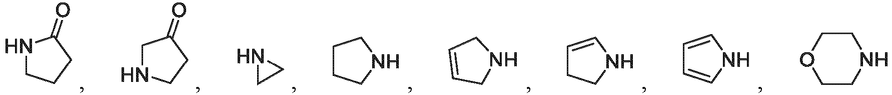 and

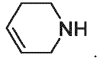

The present application uses a disilazane compound as raw material, which is cheap but easily hydrolyzed under neutral or acidic condition. In the present application, an organic base is reasonably added to the reactant, on one hand, the organic base can be used as a reaction aid to promote the reaction of the disilazane compound with the cyclic endoamine compound A, and on the other hand, the organic base can inhibit a hydrolysis side reaction of disilazane.

The preparation method of the silicon-based phosphate ester provided in the present application can be carried out under solvent-free condition, avoiding the harm caused by use of organic solvent and also subsequent treatment problem, without corrosion to the device, and use of the disilazane compound can avoid the problem of producing a halogen salt, thereby better avoiding an adverse effect on the performance of the battery. Therefore, the prepared silicon-based phosphate ester has high purity and can be directly used as an electrolyte additive without further treatment. This method can be widely applied in practical production.

The present application realizes the preparation of silicon-based phosphate ester by a one-pot method, which uses a disilazane compound and a cyclic endoamine compound A as raw materials, which are mixed with an organic base and then further reacted with an inorganic phosphate to prepare the silicon-based phosphate ester. The preparation process does not require the separation and purification of an intermediate, has simple steps, easily controllable condition and simple operation.

It can be understood that in the present application, a disilazane compound, a cyclic endoamine compound A, and an organic base are mixed to carry out a pre-reaction, so as to first produce a silicon group substituted cyclic endoamine compound intermediate B under a relatively mild condition, without need for separation of intermediate B, and then an inorganic phosphate is further added to carry out a mixing reaction to prepare the silicon-based phosphate ester.

In the present application, a byproduct of the reaction is a cyclic endoamine compound, which can be recycled to be reused in synthesis of the silicon group substituted cyclic endoamine compound intermediate B.

In one example, the silicon group substituted cyclic endoamine compound intermediate B has a following structure as shown in Formula (III): 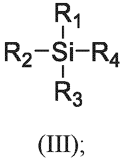
where R₁-R₃ each, at each occurrence, are independently selected from the group consisting of H, F, substituted or unsubstituted alkyl, substituted or unsubstituted alkoxy, substituted or unsubstituted unsaturated hydrocarbonyl, and substituted or unsubstituted aryl;
R₄ is 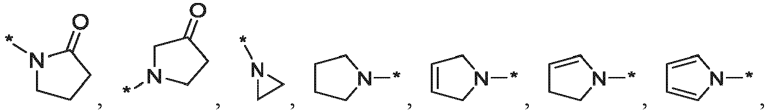 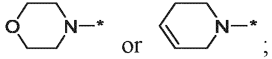 and
* represents a bonding site with Si.

In one example, R₁-R₃ each, at each occurrence, are independently selected from substituted alkyl, substituted alkoxy, substituted unsaturated hydrocarbonyl, and substituted aryl. It should be understood that alkyl, alkoxy, unsaturated hydrocarbonyl or aryl is substituted by one or more substituent groups R.

In one example, the substituent group R is halogen or cyano.

In one example, R₁-R₃ each, at each occurrence, are independently selected from substituted or unsubstituted alkyl with 1 to 3 carbon atoms, substituted or unsubstituted alkoxy with 1 to 3 carbon atoms, and substituted or unsubstituted unsaturated hydrocarbonyl with 1 to 3 carbon atoms.

In one example, R₁-R₃ each, at each occurrence, are independently selected from the group consisting of H, F, methyl, methoxy, trifluoromethyl, ethyl, vinyl, ethoxy, ethynyl, an acetonitrile group, propyl, trifluoroethyl, trifluoropropyl, isopropyl, isopropoxy, tert-butyl, pentyl, heptyl, 1-ethylpentyl, benzyl, 2-ethoxyethyl, 1-carboxymethyl vinyl, allyl, oleyl, butadiynyl, phenylethynyl, cyclopropyl, cyclopentyl, cyclohexyl, 4-methylcyclohexyl, phenyl, 1-naphthyl, 4-methoxyphenyl, 2-fluorophenyl and 3-methylphenyl.

In one example, the disilazane compound is selected from the group consisting of hexamethyldisilazane, 1,3-divinyl-1,1,3,3-tetramethyldisilazane, 1,3-diethynyl-1,1,3,3-tetramethyldisilazane, 1,3-diethyl-1,1,3-tetramethyldisilazane, 1,3-di(trifluoromethyl)-1,1,3,3-tetramethyldisilazane, and hexaethyldisilazane.

In one example, a molar ratio of the disilazane compound to the cyclic endoamine compound A is (1:1)-(1:4). Further, the molar ratio of the disilazane compound to the cyclic endoamine compound A includes but is not limited to: 1:1, 1:2, 1:3 and 1:4.

In one example, a molar ratio of the organic base to the disilazane compound is (1:5)-(1:10). Further, the molar ratio of the disilazane compound to the disilazane compound includes but is not limited to: 1:5, 1:6, 1:7, 1:8, 1:9 and 1: 10.

In one example, a molar ratio of the disilazane compound, the cyclic endoamine compound A and the organic base is 1:(1-4):(0.1-0.2).

In one example, the pre-reaction is carried out at -10 °C-40 °C for 1h-6h. Further, the temperature of the pre-reaction includes but is not limited to -10 °C, -5 °C, 0 °C, 5 °C, 10 °C, 15 °C, 20 °C, 25 °C, 30 °C, 35 °C, and 40 °C; the time of the pre-reaction includes but is not limited to: 1h, 2h, 3h, 4h, 5h, and 6h.

In one example, the pre-reaction is carried out at 10 °C-30 °C.

In one example, a molar ratio of the inorganic phosphate to the disilazane compound is (1:1)-(1:4). Further, the molar ratio of the inorganic phosphate to the disilazane compound is (1:2)-(1:3). Furthermore, the molar ratio of the inorganic phosphate to the disilazane compound includes but is not limited to: 1:2, 1:2.1, 1:2.2, 1:2.3, 1:2.4, 1:2.5, 1:2.6, 1:2.7, 1:2.8, 1:2.9 and 1:3.

In the present application, by reasonably setting the ratio of raw materials for reaction, it is beneficial to fully carry out the reaction, and the prepared silicon-based phosphate ester has a high yield, and can better meet the needs of industrial production, improve production efficiency, and reduce cost.

In one example, the mixing reaction is carried out at 20 °C-100 °C for 1h-8h. Further, the temperature of the mixing reaction includes but is not limited to 20 °C, 30 °C, 40 °C, 50 °C, 60 °C, 70 °C, 80 °C, 90 °C and 100 °C; and the time of the mixing reaction includes but is not limited to 1h, 2h, 3h, 4h, 5h, 6h, 7h and 8h.

In one example, the mixing reaction is carried out at 30 °C-80 °C.

In the present application, an entire reaction process can achieve a high yield under a lower temperature condition, and does not use a toxic organic solvent, making the reaction process safer and easier to be controlled.

In one example, the organic base is selected from the group consisting of sodium hydride, sodium ethoxide, potassium tert-butoxide, n-butyl lithium, lithium diisopropylamino, triethylamine, diethylamine, morpholine, piperidine, pyridine, DMAP, DBU, choline, tetraethyl ammonium hydroxide and a combination thereof. Further, the organic base is selected from one or more of sodium hydride, triethylamine and DMAP. Further, the organic base is selected from any one of sodium hydride, triethylamine and DMAP.

In one example, the inorganic phosphate is selected from the group consisting of ammonium phosphate, diammonium hydrogen phosphate, ammonium dihydrogen phosphate, potassium phosphate, dipotassium hydrogen phosphate, potassium dihydrogen phosphate, sodium phosphate, disodium hydrogen phosphate, sodium dihydrogen phosphate, lithium phosphate, dilithium hydrogen phosphate, lithium dihydrogen phosphate, aluminum phosphate, magnesium phosphate and a combination thereof.

The present application further provides a silicon-based phosphate ester prepared by the aforementioned preparation method of the silicon-based phosphate ester.

It can be understood that the silicon-based phosphate ester has a following structure as shown in Formula (II): 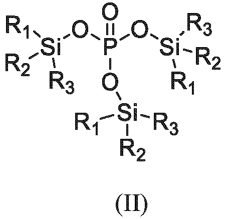 where R₁-R₃ each, at each occurrence, are independently selected from the group consisting of H, F, substituted or unsubstituted alkyl, substituted or unsubstituted alkoxy, substituted or unsubstituted unsaturated hydrocarbonyl, and/or substituted or unsubstituted aryl.

In one example, the silicon-based phosphate ester is selected from but is not limited to following structures:

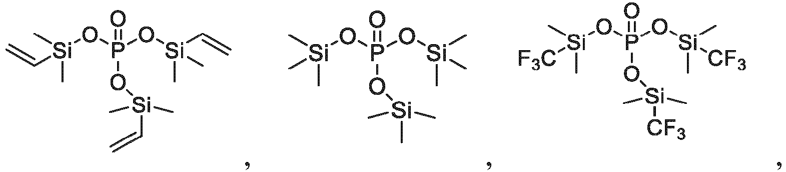

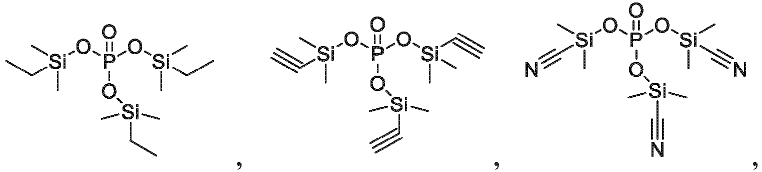

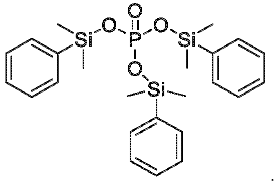

The following will provide a further detailed explanation of the present application in combination with specific examples. Experimental methods in following examples, unless otherwise defined, are all conventional methods. Raw materials, reagents, etc. used in the following examples, unless otherwise defined, are all commercially available products.

Reagents used in the following examples:
2,5-dihydropyrrole: Aladdin (purity 97%);
1,3-divinyl-1,1,3,3-tetramethyldisilazane: Aladdin (purity 97%);
sodium hydride: Aladdin (purity 60%);
ammonium dihydrogen phosphate: Macklin (purity 99%);
morpholine: Macklin (purity 99%);
DMAP: Macklin (purity 99%);
hexamethyldisilazane: Macklin (purity 98%);
1,3-diphenyltetramethyldisilazane: Macklin (purity 95%);
diammonium hydrogen phosphate: Macklin (purity 99%);
potassium dihydrogen phosphate: Macklin (purity 99.5%);
trimethylchlorosilane: Macklin (purity 99%).

### Example 1

The present example provides a preparation method of a silicon-based phosphate ester, including the following steps:
(1) 2,5-dihydropyrrole (2.0 mol), 1,3-divinyl-1,1,3,3-tetramethyldisilazane (1.5 mol), and sodium hydride (0.3 mol) were mixed at 20 °C for 3h under stirring, followed by reaction at 20 °C.
(2) After almost no ammonia was produced, the reaction mixture was heated, and ammonia was evaporated at 60 °C under an atmospheric pressure. Ammonium dihydrogen phosphate (0.6 mol) was added into the reaction mixture to react at a constant temperature for 2.5h.
(3) After the reaction was completed, the reaction mixture was subjected to distillation under a reduced pressure to obtain tris(vinyldimethylsilyl) phosphate (0.49 mol) with a yield of 81.7% and a purity of 99.65%. The GC chromatographic analysis results are shown in FIG. 1 and Table 1.

**Table 1**

| Peak number | Retention time | Peak height | Peak area | Content |
|---|---|---|---|---|
| 1 | 1.338 | 2294.758 | 7053.459 | 0.0650 |
| 2 | 1.498 | 840.212 | 2651.637 | 0.0245 |
| 3 | 2.412 | 9928.482 | 21513.500 | 0.1984 |
| 4 | 3.872 | 264.000 | 729.000 | 0.0067 |
| 5 | 8.998 | 310.842 | 2417.100 | 0.0223 |
| 6 | 9.685 | 1422204.000 | 10805663.000 | 99.6496 |
| 7 | 12.498 | 1069.059 | 3633.900 | 0.0335 |
| Total | | 1436911.353 | 10843661.597 | 100.0000 |

### Example 2

The present example provides a preparation method of a silicon-based phosphate ester, including the following steps:
(1) 2,5-dihydropyrrole (2.0 mol), 1,3-divinyl-1,1,3,3-tetramethyldisilazane (1.5 mol), and sodium hydride (0.3 mol) were mixed in an ice bath (0-4 °C) for 5h under stirring.
(2) After almost no ammonia was produced, the reaction mixture was heated, and ammonia was evaporated at 50 °C under an atmospheric pressure. Ammonium dihydrogen phosphate (0.6 mol) was added into the reaction mixture to react at a constant temperature for 3h.
(3) After the reaction was completed, the reaction mixture was subjected to distillation under a reduced pressure to obtain tris(vinyldimethylsilyl) phosphate (0.5 mol) with a yield of 83.3% and a purity of 99.71%.

### Example 3

The present example provides a preparation method of a silicon-based phosphate ester, including the following steps:
(1) morpholine (2.0 mol), 1,3-divinyl-1,1,3,3-tetramethyldisilazane (2 mol), and DMAP (0.3 mol) were mixed at 20 °C for 3h under stirring, followed by reaction at 20 °C.
(2) After almost no ammonia was produced, the reaction mixture was heated, and ammonia was evaporated at 50 °C under an atmospheric pressure. Ammonium dihydrogen phosphate (0.65 mol) was added into the reaction mixture to react at a constant temperature for 2.5h.
(3) After the reaction was completed, the reaction mixture was subjected to distillation under a reduced pressure to obtain tris(vinyldimethylsilyl) phosphate (0.53 mol) with a yield of 81.5% and a purity of 99.73%.

### Example 4

The present example provides a preparation method of a silicon-based phosphate ester, including the following steps:
(1) 2,5-dihydropyrrole (2.0 mol), hexamethyldisilazane (2 mol), and sodium hydride (0.3 mol) were mixed at 20 °C for 3h under stirring, followed by reaction at 20 °C.
(2) After almost no ammonia was produced, the reaction mixture was heated, and ammonia was evaporated at 50 °C under an atmospheric pressure. Ammonium dihydrogen phosphate (0.7 mol) was added into the reaction mixture to react at a constant temperature for 3h.
(3) After the reaction was completed, the reaction mixture was subjected to distillation under a reduced pressure to obtain tris(trimethylsilyl) phosphate (0.49 mol) with a yield of 84.3% and a purity of 99.59%.

### Example 5

Difference between the present example and Example 4 is that hexamethyldisilazane in Example 4 is replaced with 1,3-diphenyltetramethyldisilazane.

Types and ratios of the other raw materials and preparation steps in the present example are the same as those in Example 4. Finally, tris(phenyldimethylsilyl) phosphate (0.52 mol) was obtained with a yield of 74.3% and a purity of 99.55%.

### Example 6

Difference between the present example and Example 1 is that ammonium dihydrogen phosphate in Example 1 is replaced with diammonium hydrogen phosphate.

Types and ratios of the other raw materials and preparation steps in the present example are the same as those in Example 1. Finally, tris(vinyldimethylsilyl) phosphate (0.47 mol) was obtained with a yield of 78.3% and a purity of 99.62%.

### Example 7

Difference between the present example and Example 1 is that ammonium dihydrogen phosphate in Example 1 is replaced with potassium dihydrogen phosphate.

Types and ratios of the other raw materials and preparation steps in the present example are the same as those in Example 1. Finally, tris(vinyldimethylsilyl) phosphate (0.46 mol) was obtained with a yield of 76.7% and a purity of 99.7%.

### Example 8

Difference between the present example and Example 1 is that in step (1), 2,5-dihydropyrrole (2.0 mol), 1,3-divinyl-1,1,3,3-tetramethyldisilazane (3.0 mol), and sodium hydride (0.1 mol) are mixed at 20 °C.

The other raw materials and preparation steps in the present example are the same as those in Example 1. Finally, tris(vinyldimethylsilyl) phosphate (0.46 mol) was obtained with a yield of 71.7% and a purity of 99.48%.

### Example 9

Difference between this comparative example and Example 1 is that in step (2), 2 mol of ammonium dihydrogen phosphate is added.

The other raw materials and preparation steps in the present comparative example are the same as those in Example 1. Finally, tris(vinyldimethylsilyl) phosphate (0.47 mol) was obtained with a yield of 23.5% and a purity of 99.52%.

### Example 10

Difference between the present example and Example 1 is that in step (1), the temperature of the reaction is 60 °C.

The other raw materials and preparation steps in the present example are the same as those in Example 1. Finally, tris(vinyldimethylsilyl) phosphate (0.41 mol) was obtained with a yield of 68.4% and a purity of 99.61%.

### Comparative Example 1

Difference between the present comparative example and Example 1 is that sodium hydride is not added.

The other raw materials and preparation steps in the present comparative example are the same as those in Example 1. Finally, tris(vinyldimethylsilyl) phosphate (0.08 mol) was obtained with a yield of 13.3% and a purity of 99.26%.

### Comparative Example 2

The present example provides a preparation method of a silicon-based phosphate ester, including the following steps:
(1) 2,5-dihydropyrrole (2.0 mol), trimethylchlorosilane (4 mol), and sodium hydride (0.3 mol) were mixed at 20 °C for 3h under stirring, followed by reaction at 20 °C.
(2) After almost no HCl gas was produced, the reaction mixture was heated, and HCl gas was evaporated at 50 °C under an atmospheric pressure. Ammonium dihydrogen phosphate (0.7 mol) was added into the reaction mixture to react at a constant temperature for 3h.
(3) After the reaction was completed, the reaction mixture was subjected to distillation under a reduced pressure to obtain tris(trimethylsilyl) phosphate (0.13 mol) with a yield of 18.6% and a purity of 99.53%.

From comparison of the technical solution 3 in the BACKGROUND section with Comparative Example 2, it can be seen that in a solution where an intermediate product is prepared from a reaction system using a halogenated silane compound, a cyclic endoamine compound, a solvent and a bases as raw materials to further prepare a silicon-based phosphate ester, addition of the solvent is crucial. After removing the solvent, the yield of this reaction is significantly decreased. After verification and analysis, a main reason for decrease in yield may be in that: the HCl generated during silanization of the first step will react with the organic base, leading to catalyst deactivation; in addition, the halogenated silane has a lower boiling point, and during a process of heating and evaporating HCl, some unreacted halogenated silane will be taken away; and finally the residual HCl will also react with the phosphate added later to form a halogen salt. These are combined to result in a lower yield. Therefore, the addition of solvent is crucial in this system, HCl incompatible or slightly soluble with the solvent can eliminate HCl to a certain extent in a solvent-containing system, promoting the reaction and ensuring the yield of the reaction system. Therefore, it is difficult to come up with other technical routes that can both remove solvent and ensure yield in this system.

It is creative to use a disilazane compound and a cyclic endoamine compound A as raw materials to be mixed with an organic base, followed by reacting with an inorganic phosphate to prepare a silicon-based phosphate ester, which can improve the yield and purity of the silicon-based phosphate ester. Since the disilazane compound has advantages of moderate boiling point and outstanding solubility, and the disilazane compound is easy to react with amino, hydroxyl, carbonyl, carboxyl and other functional groups. Therefore, in the method of the present application, the disilazane compound can undergo a silanization reaction with the cyclic endoamine compound A under a solvent-free condition, with no other side reaction, and only NH₃ is generated as a byproduct. In addition, the generated NH₃ can be directly heated and evaporated. After adding the inorganic phosphate, as the intermediate is converted into the final product, the unreacted disilazane compound will continue to be converted into intermediate, thereby increasing the yield of the silicon-based phosphate ester. It is worth mentioning that the use of chlorosilane in Comparative Example 2 will also introduce a halogen salt into the reaction system, and thus the obtained silicon-based phosphate ester will contain more halogen ions, resulting in lower purity of the silicon-based phosphate ester, which is not conducive to the performance of the battery. Meanwhile, the addition of the halogen salt to the reaction system will also introduce additional processes such as filtration, washing and drying, and also involve solid waste treatment, resulting in high preparation cost.

The technical features of the above examples can be arbitrarily combined, and for the sake of brevity of description, not all possible combinations of various technical features in the above examples have been described; however, as long as there is no contradiction in the combinations of these technical features, the combinations shall be considered to be within the scope of the present specification.

The above examples only describe several embodiments of the present application, and are described in a more specific and detailed manner, but they cannot be understood as a limitation on the scope of the present application. It should be pointed out that for a person of ordinary skill in the art, a number of deformations and improvements can be made without departing from the conception of the present application, and they fall within the scope of protection of the present application. Therefore, the scope of protection of the present application shall be subject to the appended claims and the specification may be used to interpret the contents of the claims.

## Claims

1. A preparation method of a silicon-based phosphate ester, comprising the following steps:
mixing a disilazane compound, a cyclic endoamine compound A and an organic base to carry out a pre-reaction, then adding an inorganic phosphate to carry out a mixing reaction to prepare the silicon-based phosphate ester,
wherein the disilazane compound has the following structure as shown in Formula (I): 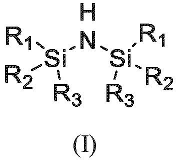
wherein R₁-R₃ each, at each occurrence, are independently selected from the group consisting of H, F, substituted or unsubstituted alkyl, substituted or unsubstituted alkoxy, substituted or unsubstituted unsaturated hydrocarbonyl, and substituted or unsubstituted aryl; and
the cyclic endoamine compound A is selected from the group consisting of

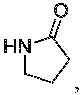

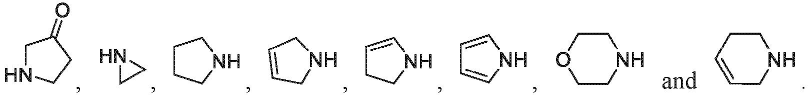

2. The preparation method according to claim 1, wherein R₁-R₃ each, at each occurrence, are independently selected from the group consisting of H, F, methyl, methoxy, trifluoromethyl, ethyl, vinyl, ethoxy, ethynyl, an acetonitrile group, propyl, trifluoroethyl, trifluoropropyl, isopropyl, isopropoxy, tert-butyl, pentyl, heptyl, 1-ethylpentyl, benzyl, 2-ethoxyethyl, 1-carboxymethyl vinyl, allyl, oleyl, butadiynyl, phenylethynyl, cyclopropyl, cyclopentyl, cyclohexyl, 4-methylcyclohexyl, phenyl, 1-naphthyl, 4-methoxyphenyl, 2-fluorophenyl and 3-methylphenyl.

3. The preparation method according to claim 1 or 2, wherein a molar ratio of the disilazane compound to the cyclic endoamine compound A is (1:1)-(1:4).

4. The preparation method according to any one of claims 1-3, wherein a molar ratio of the organic base to the disilazane compound is (1:5)-(1:10).

5. The preparation method according to any one of claims 1-4, wherein the pre-reaction is carried out at -10 °C-40 °C for 1h-6h.

6. The preparation method according to claim 5, wherein the pre-reaction is carried out at 10 °C-30 °C.

7. The preparation method according to any one of claims 1-6, wherein a molar ratio of the inorganic phosphate to the disilazane compound is (1:1)-(1:4).

8. The preparation method according to claim 7, wherein the molar ratio of inorganic phosphate to the disilazane compound is (1:2)-(1:3).

9. The preparation method according to any one of claims 1-8, wherein the mixing reaction is carried out at 20 °C-100 °C for 1h-8h.

10. The preparation method according to claim 9, wherein the mixing reaction is carried out at 30 °C-80 °C.

11. The preparation method according to any one of claims 1-10, wherein the organic base is selected from the group consisting of sodium hydride, sodium ethoxide, potassium tert-butoxide, n-butyl lithium, lithium diisopropylamino, triethylamine, diethylamine, morpholine, piperidine, pyridine, 4-dimethylaminopyridine, 1,8-diazabicycloundecane-7-ene, choline, tetraethyl ammonium hydroxide and a combination thereof.

12. The preparation method according to any one of claims 1-11, wherein the organic base is selected from the group consisting of sodium hydride, triethylamine, 4-dimethylaminopyridine and a combination thereof.

13. The preparation method according to any one of claims 1-12, wherein the inorganic phosphate is selected from the group consisting of ammonium phosphate, diammonium hydrogen phosphate, ammonium dihydrogen phosphate, potassium phosphate, dipotassium hydrogen phosphate, potassium dihydrogen phosphate, sodium phosphate, disodium hydrogen phosphate, sodium dihydrogen phosphate, lithium phosphate, dilithium hydrogen phosphate, lithium dihydrogen phosphate, aluminum phosphate, magnesium phosphate and a combination thereof.
